Europäisches Patentamt

European Patent Office

Office européen des brevets

(11) Publication number: **0 169 425**
**B1**

(12) **EUROPEAN PATENT SPECIFICATION**

(45) Date of publication of patent specification: **13.12.89**

(51) Int. Cl.⁴: **G 21 C 11/06**

(21) Application number: **85108365.9**

(22) Date of filing: **05.07.85**

(54) Improved radial neutron reflector.

(30) Priority: **25.07.84 US 634337**

(43) Date of publication of application:
**29.01.86 Bulletin 86/05**

(45) Publication of the grant of the patent:
**13.12.89 Bulletin 89/50**

(84) Designated Contracting States:
**BE DE FR IT SE**

(56) References cited:
**EP-A-0 059 130**
**FR-A-2 354 612**
**GB-A-1 042 011**
**US-A-3 264 191**

(73) Proprietor: **WESTINGHOUSE ELECTRIC CORPORATION**
**Westinghouse Building Gateway Center**
**Pittsburgh Pennsylvania 15222 (US)**

(72) Inventor: **Gjertsen, Robert Kennetz**
**126 Penn Lear Drive**
**Monroeville Pennsylvania 15146 (US)**
Inventor: **Wilson, John Francis**
**3560 Meadowgate Drive**
**Murrysville Pennsylvania 15668 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

EP 0 169 425 B1

Courier Press, Leamington Spa, England.

## Description

This invention relates in general to the field of nuclear reactors and in particular, to a radial neutron reflector especially for use in pressurized light water nuclear reactors.

In pressurized light water nuclear reactors, a reactive region commonly known as the nuclear core contains nuclear fuels such as uranium 235, as well as other fissile materials, which undergo sustained fission reactions and, in so doing, generate heat. There are, of course, other materials in a nuclear core but the presence of such other materials is not germane to the present invention and, therefore, will not be discussed. A group of mechanical components, known as reactor internals, structurally support the core within a hermetically sealed pressure vessel. The reactor internals also direct the flow of a cooling medium, such as light water, into the pressure vessel, through the nuclear core, and out of the pressure vessel. The cooling medium, also referred to as the reactor coolant, removes the heat generated by the fissioning of the nuclear fuel and transfers the heat to another cooling medium within heat exchangers which are located outside the pressure vessel. The second cooling medium, which also is usually water, is converted into steam in the heat exchangers and there is used in conjunction with steam-turbine driven electrical generators to produce electricity.

The reactor internals usually include a core barrel comprising an elongate hollow cylinder interposed between the nuclear core and the cylindrical wall of the pressure vessel, and with the nuclear core positioned within the core barrel. Typically, the reactor coolant enters the pressure vessel through one or more inlet nozzles, flows downward between the pressure vessel and the core barrel, turns 180°, and flows upward through the core and through the space between the core and the core barrel. The heated reactor coolant then turns 90° and exits the pressure vessel through one or more exit nozzles to be conducted to the heat exchangers mentioned above.

In a pressurized water reactor, the fissioning of nuclear fuel results from the capture of a neutron by the nucleus of the atoms of fissile material of the nuclear fuel. It is well known that each neutron producing a fission causes heat and the production of more than one other neutron (on the average, 2.1 neutrons are released per capture). In order to sustain the nuclear chain reaction, at least one of the newly produced neutrons must then fission another atom of fuel. Since the neutrons generated are fast neutrons, and fissioning is caused mainly by slow neutrons, it is necessary for the fast neutrons to be slowed down, or thermalized, within the confines of the nuclear core. Light water used as reactor coolant is an excellent moderator of neutrons; hence, in reactors primarily using U-235 as the nuclear fuel, light water is the primary means by which the fast neutrons produced by the fission process are thermalized so as to sustain the chain reaction.

In order to extend the life of a nuclear core for as long as practical so as to minimize time-consuming reactor shutdowns for refueling purposes, fuel assemblies often are provided with enriched nuclear fuel, usually enriched uranium 235; that is to say, an excess of reactivity is designed into the core at startup to be used later in the fuel cycle when the fuel is more depleted, thereby to extend the life of the core. Of course, the amount of enrichment continuously decreases as the reactor operates until such time as the core can no longer sustain the chain reaction and must be shut down to be refueled. During the initial phase of reactor operation when the excess of reactivity is still at maximum, some of it must be absorbed in a suitable manner, such as by means of special neutron-absorbing control rods inserted in the core and/or soluble poisons dissolved within the reactor coolant and/or burnable poison rods included in the fuel assemblies. As the excess reactivity decreases due to nuclear fuel being burnt, the amount of it being deliberately absorbed is likewise decreased so that more of the excess reactivity becomes available for practical use, thus extending the life of the reactor.

Enriched uranium is extremely expensive. Therefore, it is desirable to extend the life cycle of a reactor to a maximum with as little enrichment as possible. One recognized method of reducing the amount of enrichment needed is to make more efficient use of the neutrons produced by the fission process. One area where nuclear reactors are relatively inefficient, as regards neutron economy, is the region between the pressure vessel and the nuclear core, and in particular the region between the core barrel and the fuel assemblies. Since fuel assemblies usually have a square cross-section, placing them side-by-side results in an irregular non-circular outer periphery of the core which leaves an irregular space between the irregular core periphery and the cylindrical core barrel. Conventionally, vertically disposed stainless-steel plates placed against the irregular periphery of the core, and specially shaped horizontal "former plates" bolted to the vertical plates and to the core barrel have been used to provide for a transition from the irregular core periphery to the circular shape of the core barrel, with the vertical plates providing lateral support for the core and also preventing the reactor coolant from bypassing the core. Although not necessarily intended at first it has been determined that the vertical stainless-steel plates serve as neutron reflectors capable of improving neutron economy by reflecting radially escaping neutrons from the core back into the core. However, the effectiveness of these stainless-steel plates as neutron reflectors is limited insofar as the space between the vertical stainless-steel plates and the horizontal former plates is filled with reactor coolant which is an excellent neutron moderator but a poor neutron reflector. Thus, while some of the radially escaping neutrons are reflected back into the core by the stainless-steel plates, a great many more become thermalized and/or absorbed in the relatively large volume of reactor coolant within said space and, hence, are lost to the fission process.

It has been proposed to improve the reflection of radially escaping neutrons by dividing the space between the core periphery and the core barrel into a number of different shapes, and by filling these shapes with solid stainless-steel plates or by placing therein either a plurality of elongate metal rods or stacked metal blocks, with reactor coolant allowed to flow between the rods or, respectively, through special holes in the stacked blocks or solid steel plates in order to cool the material placed around the core for the purpose of returning thereto radially escaping neutrons. Whilst this arrangement is quite effective as a neutron reflector, it is difficult if not impossible to fill the space between an irregular core periphery and a circular core barrel with neutron reflectors of one standard shape and to provide uniform cooling. Thus, after the stacking of regularly shaped reflectors, many oddly shaped spaces are left to be filled with specially fitted reflectors of various shapes. The irregular and regular shapes of neutron reflectors render proper cooling of the latter very difficult due to the highly irregular shapes of the interstitial spaces between the reflectors; too large an interstice will result in overcooling while an abnormally small one will result in overheating and perhaps in failure. Providing properly sized coolant holes or channels in the regularly shaped reflector pieces is a problem with the most effective reflector material available, namely, zirconia, which must not be directly exposed to the reactor coolant and therefore, must be clad or covered with a protective material, such as stainless steel or Zircaloy. Hence, any cooling passages through reflectors made of such material would require a protective cladding. However, internal cladding usually poses fitup and differential thermal expansion problems. External cladding of zirconia reflector poses similar problems and another one. Thus, in order that reflector blocks can be readily inserted into a cladding tube, it is desirable to provide some clearance between the outer dimensions of the blocks and the inner diameter of the cladding. It has been found that this clearance, although relatively small, is likely to cause problems when the clad reflector element is incorporated in a nuclear reactor and the pressure existing therein during operation causes the cladding to collapse onto the reflector blocks which it contains. Such uncontrolled collapse can result in wrinkling of the cladding surface, and the wrinkles appearing thereon at random locations are likely to interfere with the smooth flow of coolant and, besides, are particularly susceptible to corrosion.

It is the principal object of the invention to provide a neutron reflector which overcomes this problem and, in addition, can be used in forming radial reflector shields which have a high solid-to-void ratio and are susceptible of uniform cooling.

The invention accordingly resides in a neutron reflector as claimed in claim 1. The invention resides further in a method of fabricating a neutron reflector as claimed in claim 4.

It will be appreciated that placing this neutron reflector side-by-side with like neutron reflectors will result in an array having a very high solid-to-void ratio since the flat sides of the reflectors with the substantially square cross-section are against each other so as to leave substantially no voids therebetween other than the flow channels which are formed by the complementary grooves in adjacent reflector sides, and which enable the neutron reflector array to be cooled very uniformly throughout. Preferably, the corners of each neutron reflector are rounded such that the juxtaposed corners of any four reflectors adjoining each other will complement each other in defining a coolant flow passage. The substantially square cross-sectional configuration of neutron reflectors embodying the invention also affords much flexibility in arraying them so as to conform to a great variety of irregular shapes of spaces to be filled.

Moreover, the neutron reflector according to the invention as defined above permits the use of zirconia as a neutron reflective material without experiencing the above-mentioned problem regarding wrinkling of the cladding tube since the latter having a cross-sectional size and configuration which correspond to the cross-sectional size and configuration, respectively, of the stack of neutron reflective blocks, is in firm wrinkle-free surface-to-surface contact with the blocks and, thus, cannot collapse and become wrinkled subsequently when put to use in a reactor core.

In fabricating this neutron reflector, the reflective blocks are inserted and stacked into the cladding tube while the latter still has an initial cross-section which is substantially square and of a size providing clearance for the blocks to be easily inserted and stacked, and the cladding tube having all the blocks stacked therein is then subjected to a temperature and externally applied pressure sufficient to cause the cladding tube to collapse onto the stack of blocks contained therein, and thereby to establish full surface-to-surface contact with the blocks substantially without wrinkling of the cladding tube. It will be appreciated that this pre-collapsing of the cladding tube deliberately brought about during the assembly of the neutron reflector will leave a flat and wrinkle-free outer cladding surface since the virtual surplus of cladding resulting as the cladding collapses is forced into and accommodated in the axial coolant-flow grooves formed in the sides of the stacked blocks within the cladding tube. Consequently, there will be no subsequent collapse, accompanied with random wrinkling, when the neutron reflector is installed in a nuclear reactor and subjected to the operating temperature and pressure therein.

A preferred embodiment of the invention will now be described, by way of example, with reference to the accompanying drawings, in which:-

Figure 1 is a plan view of a neutron reflector comprising a block of neutron reflective material and embodying the invention;

Figure 2 is a side elevational view of the reflector block of Figure 1;

Figure 3 is a plan view of the reflector block disposed within a cladding tube shown in its initial assembly state;

Figure 4 is an isometric, partially cross-sectional and partially fragmentary view of a neutron reflector rod comprising a stack of reflector blocks in a cladding tube shown in a post-assembly state;

Figure 5 is a plan view of several reflector rods arrayed side-by-side;

Figure 6 is a side elevational view of a typical pressurized-water reactor with which neutron reflectors according to the invention may be used; and

Figure 7 is a cross-sectional view taken along line 7—7 in Figure 6.

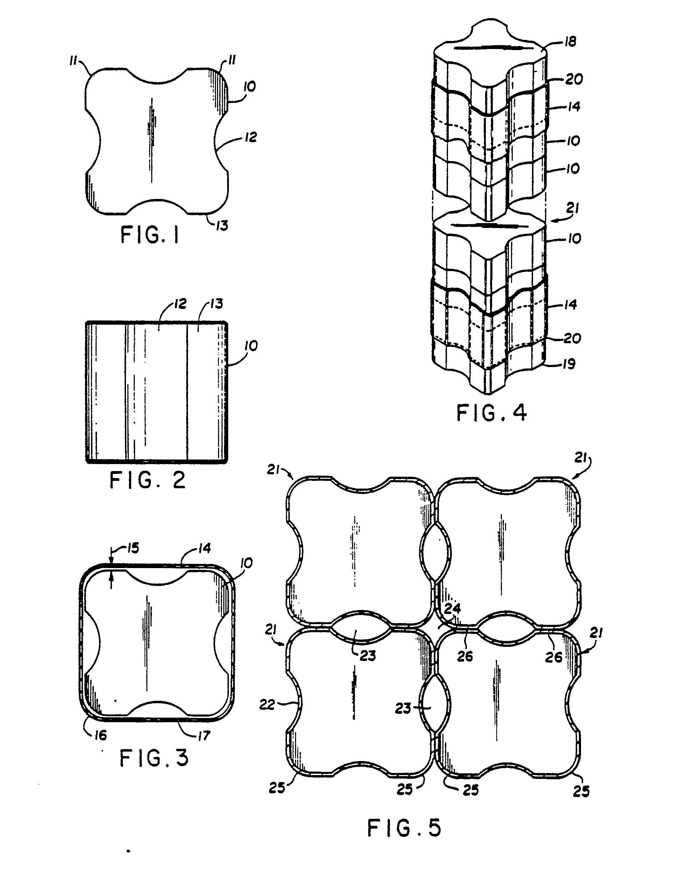

Referring now to the drawings, Figures 1 and 2 illustrate a pellet or block 10 made of neutron reflecting materials and having a substantially square cross-sectional shape, with the four corners 11 thereof rounded for a purpose which will become apparent as the description proceeds. The block 10 has in each side 13 thereof a shallow groove 12 which extends, substantially at the middle of the respective side, axially throughout the length of the block 10. It would be within the ambit of the invention to provide in each side of the block several such grooves spaced laterally apart, the number and location of grooves chosen depending upon the depth of the grooves, the width of each block face 13, the amount of cooling desired, the actual in-core location of the particular reflector rod using the blocks 10 as well as other hydraulic, thermal, neutronic, pressure, and stress considerations.

Zirconia is probably the most effective neutron reflecting material available at this time. However, its characteristics are such as to preclude direct exposure thereof to the reactor coolant. Thus, if zirconia is the material to be used, it must be fully protected from the reactor coolant which traditionally is done by cladding it in stainless steel and/or Zircaloy. Stainless steel, although not quite as effective as zirconia, is also a good neutron reflector and may be used with good results. Assuming that blocks such as block 10, made of zirconia are employed, they are loaded into a can or tubing 14 (Figure 3) of square cross-section and of a size to provide sufficient clearance 15 for the blocks 10 to be readily inserted. The corners 16 of the tubing 14 are rounded to conform to the rounded corners 11 of the blocks 10, having substantially the same radius of curvature. It should be noted that the sides 17 of the tubing 14 are flat, i.e. not grooved, at this initial stage of loading the blocks 10.

When loading of the cladding tube 14 with neutron reflector blocks 10 is completed, the tube is sealed at both ends with end plugs 18 and 19 having the same cross-sectional size and configuration as the blocks and which are affixed to the tubing 14 by means of seal welds 20. During welding, compressive forces are axially applied to the end plugs 18 and 19 to eliminate any assembly gaps between the stacked blocks 10. The overall length of the reflector rod 21 is consistent with the overall length of the nuclear core in which it is intended to be employed.

After assembly of each reflector rod 21, and prior to its installation in a reactor, the rod is subjected, e.g. in an autoclave, to approximately the maximum pressure and temperature it will experience in the actual reactor environment, and at any rate to a pressure sufficient to cause the cladding 14 to collapse onto the blocks 10 and to take their cross-sectional shape, the cladding material thus forced into the grooves 12 of the blocks 10 forming grooves 22 in the outer surfaces of the reflector rod 21. The initial assembly clearance 15 shown in Figure 3 is now completely eliminated and the cladding 14 is fit firmly against each of the blocks 10, as seen from Figures 4 and 5.

Laboratory testing has verified the collapsing of type 304 stainless steel cladding having a nominal thickness of approximately .051 cm onto simulated blocks of 2.54 cm square zirconia. An assembly clearance of .025 to .038 cm was used for the tests. Each block had a single groove in each side having a radius of approximately .737 cm by .203 cm deep. An autoclave temperature of approximately 633°K and a pressure of approximately 190 kg/cm² was used. The assembly gap was completely eliminated, the sides of the tubing were wrinkle free and well defined grooves were formed in the tubing. The radius of curvature of the cladding substantially coincided with and formed around the radius of curvature of the corners 16 of the blocks 10. The tests unequivocably proved the manufacturability of the invention. Should it be desired to deviate from the sizes, dimensions and number of grooves as stated above, by a similar test, utilizing methods well known in the art, it is possible to establish suitable dimensions of the clad thickness and the assembly clearance.

Figure 5 illustrates the axial cooling channels formed by the side-by-side stacking of square reflector rods 21 with grooves 22. Channels 23 are formed by mating adjacent grooves 22 and channels 24 are formed by the juxtaposition of the rounded corners 25. The square arrangement leaves virtually no interstitial gaps between the flat mating surfaces 26 of the reflector rods 21. If offset grooves were formed in the blocks 10 and consequently, in the cladding 14, the side-by-side stacking of reflector rods would provide at least two cooling channels between abutting sides of the reflector rods 21. In this manner, the coolant flow cross-sectional area may be spread out across the sides of the reflector rods 21. Other variations in the location and number of grooves 22 may be readily envisioned to result in other configurations of cooling flow channels.

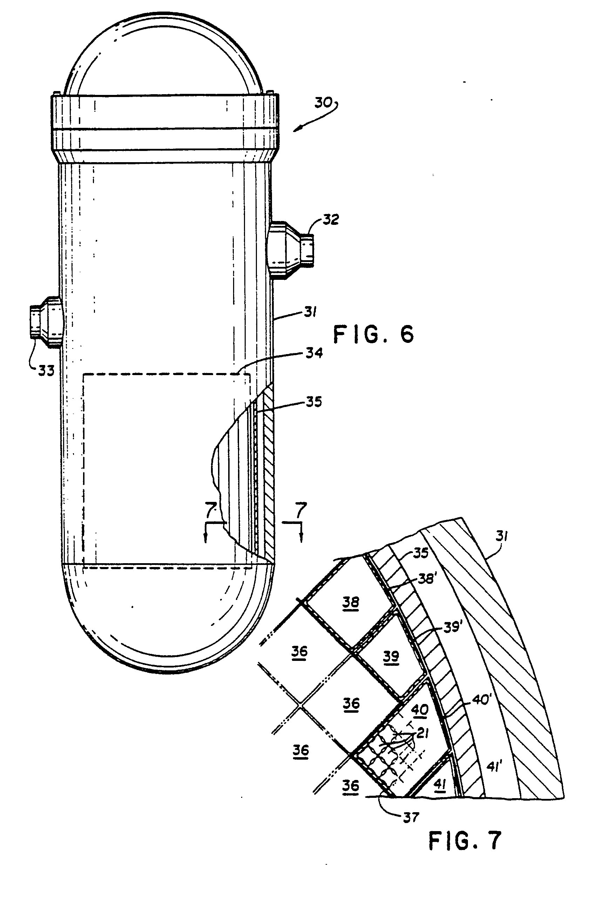

A typical reactor 30 in which neutron reflectors according to the invention may be used is shown in Figure 6. It includes a pressure vessel 31 having a coolant inlet nozzle 32 and a coolant outlet nozzle 33. Disposed within the pressure vessel 31 are a nuclear core 34 and a core barrel 35 comprising a cylindrical structural member which functions as a reactor coolant flow separator located between the nuclear core 34 and the pressure vessel 31. The reactor coolant enters through the inlet nozzle 32, flows down and around the outside of core barrel 35, turns 180° to flow upward through the core 34 and the core barrel 35, and then exits through the outlet nozzle 33.

Figure 7 shows a portion of the core periphery in cross section, taken along line 7—7 of Figure 6. A plurality of fuel assemblies 36 of substantially square cross-section are stacked side-by-side in an array resulting in an irregular core periphery indicated by darkened line 37. The whole space between the irregular core periphery 37 and the core barrel 35 is filled with reflector rods 21. For purposes of simplicity, only some of the reflector rods 21 are indicated in space 40, and none is shown of those occupying spaces 38, 39 and 41. The spaces 38 to 41 may be fitted with hollow housings or enclosures 38', 39', 40' and 41', respectively, into which the reflector rods 21 may then be fitted in side-by-side arrays such as shown in Figure 5. Any odd space still remaining after the fitting in of reflector rods 21 may be left unoccupied to serve as a coolant channel or may be filled with appropriately shaped reflector pieces.

## Claims

1. A neutron reflector for use together with like neutron reflectors arrayed side-by-side about the nuclear core of a nuclear reactor, said neutron reflector being a rod-like element which includes a plurality of neutron reflective blocks stacked end to end with one another and having a substantially square cross-sectional configuration, characterized in that at least one coolant-flow groove is formed in each side of the rod-like element and extends longitudinally throughout the length thereof, said rod-like element comprising a cladding tube (14) and the plurality of neutron reflective blocks (10) within the tube, the stack of neutron reflective blocks having said substantially square cross-sectional configuration and at least one said coolant-flow groove formed in each side thereof and extending from end to end, and said cladding tube having a cross-sectional size and configuration which correspond to the cross-sectional size and configuration of said stack of neutron reflective blocks such that the cladding tube is in substantially wrinkle-free surface-to-surface contact with the blocks.

2. A neutron reflector according to claim 1, characterized in that the rod-like element has rounded corners.

3. A neutron reflector according to claim 1 or 2, characterized in that said cladding tube (14) is sealed at both ends thereof with end plugs (18, 19) corresponding in cross-sectional size and configuration to the cladding tube.

4. A method of fabricating a neutron reflector defined in claim 1, 2 or 3, characterized in that said neutron reflective blocks (1) are inserted and stacked into the cladding tube (14) when the latter has an initial cross-section which is substantially square and of a size providing clearance for the blocks (10) to be readily inserted and stacked, and the cladding tube (14) having all the neutron reflective blocks (10) stacked therein is subjected to a temperature and externally applied pressure sufficient to cause the cladding tube to collapse onto the stack of blocks contained therein, thereby to establish said surface-to-surface contact substantially without wrinkling of the cladding tube.

## Patentansprüche

1. Neutroneneflektor zum Einsatz zusammen mit gleichartigen, nebeneinander um den Reaktorkern eines Kernreaktors angeordneten Neutronenreflektoren, wobei der Neutronenreflektor als stabförmiges Element ausgebildet ist, das eine Mehrzahl von stirnseitig aneinanderstoßend gestapelten neutronenreflektierenden Körpern aufweist und eine etwa quadratische Querschnittsform hat, dadurch gekennzeichnet, daß an jeder Seite des stabförmigen Elements mindestens ein Kühlmittelströmungsnut eingeformt ist, die in Längsrichtung über dessen gesamte Länge verläuft, und daß das stabförmige Element ein Hüllrohr (14) aufweist, in welchem die neutronenreflektierenden Körper (10) angeordnet sind, und der Stapel der neutronenreflektierenden Körper die genannte, im wesentlichen quadratische Querschnittsform hat und an jeder Seite mindestens eine vom einen bis zum anderen Ende verlaufende eingeformte Kühlmittelströmungsnut aufweist und das Hüllrohr eine Größe und Form des Querschnitts des Stapels der neutronenreflektierenden Körper entsprechende Größe und Form seines Querschnitts aufweist, derart, daß das Hüllrohr sich in im wesentlichen verwerfungsfreier Oberflächen-Oberflächen-Berührung mit den Körpern befindet.

2. Neutronenreflektor nach Anspruch 1, dadurch gekennzeichnet, daß das stabförmige Element abgerundete Ecken aufweist.

3. Neutronenreflektor nach Anspruch 1 oder 2, dadurch gekennzeichnet, daß das Hüllrohr (14) an seinen beiden Enden mit Endkappen (18, 19) verschlossen ist, die in Größe und Konfiguration ihres Querschnitts dem Hüllrohr entsprechen.

4. Verfahren zur Herstellung eines Neutronenreflektors nach Anspruch 1, 2 oder 3, dadurch gekennzeichnet, daß die neutronenreflektierenden Körper (10) in das Hüllrohr eingesetzt und darin gestapelt werden, wobei das letztere einen anfänglichen Querschnitt hat, der im wesentlichen quadratisch und von einer Größe ist, die ein leichtes Einsetzen und Stapeln ermöglichendes Spiel für die Körper (10) berücksichtigt, und daß das Hüllrohr (14) dann mit sämtlichen darin gestapelten neutronenreflektierenden Körpern (10) einer Temperatur und einem äußerlich einwirkenden Druck ausreichender Höhe ausgesetzt wird, der ein Zusammendrücken des Hüllrohrs auf den darin befindlichen Stapel von Körpern bewirkt, so daß die genannte Oberflächen-Oberflächen-Berührung im wesentlichen ohne Knittern des Hüllrohrs erreicht wird.

**Revendications**

1. Réflecteur neutronique destiné à être utilisé conjointemnt avec des réflecteurs neutoniques analogues disposés côte à côte autour du coeur nucléaire dans un réacteur nucléaire, ce réflecteur nemutronique étant un élément analogue à une barre qui comprend une pluralité de blocs réflecteurs de neutrons emilés bout à bout les uns avec les autres et ayant une configuration de section droite sensiblement carrée, caractérisé par le fait qu'au moins une gorge pour l'écoulement du réfrigérant est formée dans chaque côté de l'élément analogue à une barre et s'étend longitudinalement sur la totalité de la longeur de celui-ci, cet élément analogue à une barre comprenant un tube de gainage (14) ainsi que la pluralité de blocs (10) réflecteurs de neutrons disposés à l'intérieur de ce tube, la pile de blocs réflecteurs de neutrons ayant ladite configuration de section droite sensiblement carrée et comportant au moins une gorge d'écoulement de réfrigérant formée dans chaque côté de la pile et s'y étendant d'une extrémité à l'autre, et le tube de gainage ayant des dimensions et une configuration de section droite qui correspondent aux dimensions et à la configuration de section droite de la pile de blocs réflecteurs de neutrons, de telle sorte que le tube de gainage est en contact de surface contre surface exempt d'irrégularités avec les blocs.

2. Réflecteur neutronique selon la revendication 1, caractérisé par le fait que l'élément analogue à une barre a ses arêtes arrondies.

3. Réflecteur neutronique selon la revendication 1 ou 2, caractérisé par le fait que le tube de gainage (14) est fermé de façon étanche à ses deux extrémités par des bouchons d'extrémité (18, 19) dont les dimensions et la configuration de section droite correspondent à celles du tube de gainage.

4. Procédé pour fabriquer un réflecteur neutronique selon les revendications 1, 2 ou 3, caractérisé par le fait que l'on insère et empile les blocs (10) réflecteurs de neutrons dans le tube de gainage (14) quand ce dernier à une section droite qui est sensiblement carrée et a des dimensions assurant du jeu pour que les blocs (10) soient insérés et empilés facilement, et on soumet le tube de gainage (14) dans lequel tous les blocs (10) réflecteurs de neutrons ont été empilés à une température et à une pression, appliquées extérieurement, suffisantes pour que le tube de gainage s'affaisse sur la pile de blocs qui y est contenue, de manière à établir ainsi ledit contact de surface contre surface sensiblement sans plissement du tube de gainage.

FIG. 1

FIG. 2

FIG. 3

FIG. 4

FIG. 5

FIG. 6

30

32

31

33

34

35

7 7

FIG. 7

31

35

38'

38

39'

36

39

36

40'

40

21

36

41'

36

41

36

37